(19) Europäisches Patentamt
European Patent Office
Office européen des brevets

(11) Publication number: 0 334 577 A1

(12) EUROPEAN PATENT APPLICATION

(21) Application number: 89302726.8

(22) Date of filing: 20.03.89

(51) Int. Cl.4: C 04 B 35/80

(30) Priority: 21.03.88 US 171314

(43) Date of publication of application: 27.09.89 Bulletin 89/39

(84) Designated Contracting States: DE FR GB

(71) Applicant: HOECHST CELANESE CORPORATION
Route 202-206 North
Somerville, N.J. 08876 (US)

(72) Inventor: Sawyer, Linda C.
14 Sunset Drive
Chatham New Jersey (US)

(74) Representative: De Minvielle-Devaux, Ian Benedict Peter et al
CARPMAELS & RANSFORD 43, Bloomsbury Square
London WC1A 2RA (GB)

(54) **Carbon-coated silicon carbide whiskers for controlling the formation of an oxide coating.**

(57) Ceramic composites which possess improved mechanical properties, in particular, increased fracture toughness are provided by incorporating carbon coated silicon carbide whiskers in the ceramic to limit the formation of surface oxide on the whiskers. The carbon coating can be applied directly on the whiskers prior to mixing with the ceramic to form the composite or the carbon coating may be formed in-situ during sintering of the ceramic by applying an organic coating on the whiskers prior to mixing with the ceramic and carbonizing the organic coating during sintering of the composite.

EP 0 334 577 A1

## Description

# FINISH APPLICATION AS A CARBON SOURCE FOR CONTROL OF FORMATION OF AN OXIDE COATING ON SiC WHISKERS

Generally, the present invention relates to ceramic composites and the preparation thereof, and more particularly to such composites in which single crystal silicon carbide whiskers are dispersed to provide improvements in the fracture toughness and fracture strength of the ceramic.

Recent emphasis has been placed upon the use of ceramic materials as structural components in heat engines and high-temperature conversion systems such as turbines. For the use of ceramic in such applications, fracture toughness of the material is a critical consideration. Conventional ceramic materials have relatively low fracture toughness with the exception of $Al_2O_3$-$ZrO_2$ and partially stabilized $ZrO_2$. Utilization of monolithic ceramic material such as SiC, $Si_3N_4$, $Al_2O_3$ and mullite ($3Al_2O_3.2SiO_2$) for the fabrication of structural components for use in heat engines and other high-temperature conversion systems has required the use of ceramic components with very small flaw size, e.g., less than about 50 µm, in order to provide acceptable fracture toughness. However, in structural components especially of complex configuration, the determination of such small flaw sizes has been very difficult to achieve by using nondestructive inspection techniques.

Efforts to overcome the lack of sufficient fracture toughness in ceramic material has included the development of fiber-reinforced composites. For example, graphite fiber reinforced ceramics provide impressive fracture toughness and strength at ambient temperatures but these ceramic composites are found to be of questionable value when subjected to elevatd temperatures because of the oxidation of the carbon fibers and the reaction between the carbon in the fibers and the constituents of the ceramic material. On the other hand, the use of inorganic fibers such as silicon carbide (SiC) filaments and chopped fibers for reinforcing or strengthening ceramic material has exhibited some success but encountered several problems which considerably detracted from their use. For example, conventional silicon carbide filaments or chopped fibers are of a continuous polycrystalline structure and suffer considerable degradation due to grain growth at temperatures above about 1250° C, which severely limits their use in high temperature fabrication processes such as hotpressing for producing ceramic composites of nearly theoretical density. Further, during high pressure loadings such as encountered during hot pressing, the polycrystalline fibers undergo fragmentation which detracts from the reinforcing properties of the fibers in the ceramic composite. Also, these polycrystalline fibers provide insufficient resistance to cracking of the ceramic composite since the fibers extending across the crack line or fracture plane possess insufficient tensile strength to inhibit crack growth through the composite especially after the composite has been fabricated by being exposed to elevated pressures and temperatures as in hot pressing.

The use of the single crystal silicon carbide whiskers in the ceramic composite, on the other hand, has been found to provide an improvement in the fracture toughness of the ceramic composite due to the ability of the whiskers to absorb cracking energy. The whiskers appear to toughen the composites by crack deflection, as when a crack encounters the whisker, crack bridging and by whisker "pull-out". Whisker "pull-out" occurs during cracking of the ceramic matrix at a location where the SiC whisker-matrix interface shear strength is relatively low as provided by radial tensile stresses across the whisker-matrix bond. As a crack-front propagates into the composite, many of the whiskers which span the crack line and extend into the ceramic matrix on opposite sides of the crack must be either fractured or pulled out of the matrix in order for the crack to grow or propagate through the ceramic. Since the single crystal SiC whiskers possess sufficient tensile strength to resist fracturing, they must be pulled out of the matrix for the crack to propagate. As these whiskers are pulled out of the matrix, they exhibit considerable bridging forces on the face of the crack and effectively reduce the stress intensity at the crack tip so as to absorb the cracking energy. Accordingly, the whiskers also effectively reduce the tendency of the composite to crack and inhibit crack propagation. U.S. Pat. Nos. 4,543,345; 4,569,886 and 4,657, 877 disclose silicon carbide whisker-reinforced ceramic composites.

Unfortunately, silicon carbide whisker-reinforced ceramic composites have only shown limited improvements in fracture toughness over the unreinforced ceramic. For example, alumina has a fracture toughness of about 4 $MPa.m^{1/2}$ while SiC whisker-reinforced alumina has a fracture toughness of about 8-10 $MPa.m^{1/2}$. One possible reason for the limited improvement is that the silicon carbide whiskers, generally, have an oxide or oxycarbide coating present on the surface. The oxide coating is believed to adhere relatively strongly to the ceramic matrix, thus, preventing sufficient pull-out of the whiskers and consequently limiting the strength and toughness improvement that would be expected. While acid removal of the oxide coating prior to processing into a ceramic composite has been attempted, this procedure has not been found to be very successful as the oxide coating readily forms again and as well the SiC whisker surface still contains active sites for strong covalent or ionic bonding to the matrix.

Accordingly, it is the primary objective of the present invention to provide silicon carbide whisker-reinforced ceramic composites with improved toughness.

## SUMMARY OF THE INVENTION

In accordance with the present invention, silicon carbide whisker reinforced ceramic composites are prepared in which the improvements in mechanical properties, particularly increased fracture toughness, expected in such whisker reinforced composites are realized. This is achieved by providing a carbon coating on the silicon carbide whiskers. The carbon coating limits the formation of an oxide layer on the whisker surface by inhibiting the diffusion of $O_2$ onto the whisker surface and, in addition, will react with silicon oxides present on the whisker surface and form a silicon carbide surface layer at elevated temperatures. The carbon-coated whiskers do not excessively adhere to the ceramic matrix and will pull-out of the ceramic matrix when the matrix is subjected to crack-forming stresses. The carbon coated whiskers therefor better absorb the cracking energy and provide the ceramic composite with improved fracture toughness.

Generally, the ceramic composites which are provided by the present invention comprise a matrix of ceramic material having homogeneously dispersed therein about 5-60 vol% of silicon carbide whiskers. The silicon carbide whiskers have a monocrystalline or single crystal structure, an aspect ratio of less than 30 and are provided with a carbon coating to limit the formation of a surface oxide layer. The carbon coating can be applied by a variety of techniques such as by chemical vapor deposition or by coating with an organic material which is converted to carbon by heating. The whiskers may be provided with the carbon coating prior to incorporation into the ceramic matrix or the carbon coating may be formed in situ by pretreating the whiskers with the organic coating which is converted to a carbon coating during processing, such as sintering, of the ceramic composite.

The ceramic composties can be prepared by hot pressing a homogeneous mixture of particulate ceramic material and the treated silicon carbide whiskers or by molding the composite such as by extrusion molding or injection molding wherein a small addition of an organic binder is added to the mix of ceramic matrix and whiskers.

## DETAILED DESCRIPTION OF THE INVENTION

As generally described above, the present invention is directed to ceramic composites which exhibit improved mechanical properties, particularly increased fracture toughness, and to the manufacture of such composites.

In accordance with the present invention the ceramic composites are prepared by forming a mixture of ceramic powder or particulates with monocrystalline SiC whiskers which have been coated with carbon or carbon-forming organic material. The mixture is then hot pressed, extruded or molded in a conventional manner to form a ceramic-SiC whisker composite article.

The ceramic material found to be particularly useful for fabricating the ceramic composites of the present invention includes $Al_2O_3$, mullite ($3Al_2O_3.2SiO_2$), $B_4C$, $Si_3N_4$, cordierite ($2MgO.2Al_2O_3.5SiO_3$), $Al_2O_3.ZrO_2$, $ZrO_2$, $Si_3N_4$ (with $Al_2O_3$ and $Y_2O_3$ dopants), and SiC (doped with B and C). This list of ceramic materials is not an attempt to limit the invention and, thus, any and all ceramic materials which can be converted into powders may find use in the present invention.

The SiC whiskers used in the present invention are single crystals containing alpha, beta and mixed alpha and beta phases of silicon carbide. The average diameter of the whiskers is about 0.6-2 microns and the length about 10-80 microns. It is preferred that the aspect ratio of the whiskers be less than about 30. Most preferred are SiC whiskers with aspect ratios between about 10 to 20.

The whisker content in an average lot of a typical commercial whisker product is 80-90% with the rest being formed of silicon carbide powders. Chemical analysis of the whiskers typically show major impurities of oxygen: 0.1 wt.%; Mn, Mg, Fe, Al: 0.1-0.8 wt.%; Cr, K, Cu, Ni, Na: 100-1,000 ppm. SiC whiskers are manufactured from rice hulls and are commercially available as grade F-9, formerly known as ARCO SC-9 whiskers from Advanced Composite Materials Co., Greer, S.C. or under the trademark "Tokamax" obtainable from Tokai Carbon Company, Tokyo, Japan, which has a sales office in New York, NY. American Matrix, Inc., Knoxville, Tenn. and Tateho Chemical Ind., Kariya, Japan also market SiC whiskers. Other commercial sources of SiC whiskers are available. Because of the high purity of the SiC whiskers they are stable at temperatures up to 1800° C in inert gases. Also, the thermal stability of the SiC whiskers in ceramic matrices at processing temperatures up to about 1900° C provides a distinct advantage over continuous polycrystalline SiC fibers that typically degrade due to grain growth above about 1200° C.

To improve whisker pull-out in the ceramic composite and, thus, improve the fracture toughness of the composite, the silicon carbide whiskers are provided with a carbon coating. The carbon coating can be applied to the whiskers before the whiskers are mixed with the ceramic powder or, the carbon coating can be formed in-situ during heat treatment of the shaped ceramic composite. Any known technique can be used to apply the carbon coating on the whiskers prior to compounding with the ceramic powder.

For example, the carbon coating can be applied by CVD. In this technique, a fluidized bed of the silicon carbide whiskers is utilized in which a fluidizing gas containing a hydrocarbon provides fluidization of the whiskers and a source of carbon. The hydrocarbon preferably should be one that has a decomposition temperature of 500° C or less or 1 atmosphere pressure. Hydrocarbons such as acetylene, propylene and isoprene are most preferred although any aromatic, aliphatic, cycloaliphatic, or olefinic hydrocarbon can be used. At temperatures above 500° C, a carbon deposit will form on the whiskers providing a barrier to the formation of an undesirable oxide surface film.

The whiskers may also be coated with an organic material which when heated to an elevated temperature will carbonize and form a carbon coating on the whiskers. Typical organic materials which can be used as carbon-forming coatings include hydrocarbon waxes and known precarbonaceous polymers such as polyacrylonitrile, polyisobutylene, polyisoprene, polystyrene, polymethyl methacrylate, polyvinyl alcohol, polyacrylamide, polyacrylic acid, polyethylene oxide, cellulose, carboxymethyl cellulose, hydrolyzed starch, dextran, guar gum, polyvinylpyrrolidone, polyurethane, polyvinylacetate, and the like, and mixtures thereof. The organic material is preferably applied to the whiskers in the liquid state, most preferably as a dilute solution of the organic material in a suitable solvent. The solutions may be applied on the whiskers by any known coating techniques such as by spraying or immersion with agitation of the whiskers in the solution. Once coated, the solvent is driven off to dry the coating. One useful technique is to apply the organic material solution onto a fluidized bed of the whiskers to individually coat same. In the fluidized bed coating method or in any of the liquid coating techniques, it may be useful to maintain the coated whiskers in a fluidized state during the solvent removal step or during any curing process utilized to harden the organic coating to avoid agglomeration of the coated whiskers. Subsequent heating of the organic material coated whiskers at temperatures of at least about 500°C pyrolyzes the organic coating and provides a carbon coating on the whiskers.

In an alternative method, the silicon carbide whiskers may be provided with an organic coating by any of the methods described above and the organic coated whiskers dispersed within the ceramic matrix prior to carbonizing treatment. In this method, the carbon coating is formed in-situ during subsequent heat treatment of the ceramic composite. Heat treatment to carbonize the organic coating can take place during hot pressing into a ceramic article or during a process in which molded ceramic composites are heated to burn-out organic binder or subsequent sintering of the molded ceramic.

In either method, the carbon coating should fully coat the whiskers. Thus, coating thicknesses of about 0.05 to 0.5 micron are useful. Preferred coating thicknesses are about 0.05 to 0.2 micron. It is important that the thickness of the carbon coating be sufficient to limit diffusion of $O_2$ and further oxidation of the whisker surface as well provide enough carbon for reaction with Si-O which is present on the surface of the whisker to convert the oxide to carbide. As previously stated, it is oxide or oxycarbide on the whisker surface which appears to tightly adhere to the surrounding ceramic matrix and which greatly reduces the ability of the whiskers to pull-out and provide the necessary bridging forces to reduce cracking of the ceramic composite.

While any of the coating techniques as described above are useful to provide the carbon coating, it is believed that best control of coating thickness and coating uniformity can be achieved by coating the whiskers with the carbon-forming organic material. This method is less expensive than CVD and can better provide for the formaiton of a uniform monolayer of carbon on the whisker.

The concentration of the SiC whiskers in the composites will range from about 5 to 60 vol.% and preferably about 5-40 vol.% with about 20-30 vol.% providing the best results. With SiC whisker concentrations greater than about 60 vol.%, considerable whisker clumping occurs which detracts from the composite toughness. With less than about 5 vol.% whiskers, insufficient toughness is achieved due to the low concentration of the SiC whiskers in the matrix which will expose an insufficient number of whiskers in the crack plane to adequately absorb the cracking energy.

The mixing of the SiC whisker with the ceramic powders can be provided by employing any suitable mixing technique which will provide a homogeneous dispersion of the whiskers in the matrix powders with minimal agglomeration and whisker clumping. For example, suitable mixtures may be formed by ball-milling, using a Waring blender, a mixing medium and an ultrasonic homogenizer, with the best mixing being achieved when using fine powders. The mixing of the SiC whiskers with ceramic powders to provide a homogenous dispersion of the whiskers in the matrix powders is somewhat difficult to achieve due to the tendency of forming undesirable agglomeration or whisker clumping during the mixing step. It has been found tht ceramic matrix powders in a size range of about 0.05 to 1.0 micron are especially preferred to form the homogeneous mixture since the tendency of whiskers to agglomerate is less with these fine powders. Ceramic matrix powders of less than 0.5 micron are especially preferred. However, with improved mixing techniques, it is expected that agglomerate-free homogeneous mixtures can be provided with ceramic powders up to about 44 microns (-325 mesh). In a typical mixing operation, a predetermined amount of SiC whiskers and ceramic matrix powders are mixed in hexane in the blender. This mixture can then be further dispersed in a suitable ultrasonic homogenizer. The mixture is then dried by evaporation with constant agitation under flowing air. Alternatively, distilled water used as a mixing medium with freeze-drying can provide similar results. Also, dry mixing or mixing with other volatile media may be satisfactorily utilized to obtain a homogenous mixture with minimal SiC whisker clustering or agglomeration. With any mixing technique, the mixing becomes more difficult for providing a homogeneous dispersion of the whiskers as the whisker content increases due to the clustering of the whiskers into bundles within the mixture. Also, as the aspect ratio of the whiskers increases, homogeneous dispersion becomes more difficult.

Upon completing the mixing operation, the mixture is formed into a suitable article configuration. Any known shaping technique can be used including dry composition methods and extrusion and injection molding. Hot pressing provides composites with essentially the full theoretical density of the ceramic. Composites with greater than about 99% of the theoretical density of the ceramic matrix material obtain the maximum toughness with the minimum presence of porosity and other flaws which detract from the toughness of the composite. High density is also required from the standpoint of strength.

The hot pressing step may be achieved in a suitable induction or resistance heated furnace with punches or pressing components formed of graphite or any other suitable material which is capable of withstanding the required pressures and temperatures without adversely reacting with the composite constituents. The pressing, for example, can be achieved in a vacuum furnace at temperatures ranging from about 1600° to 1950°C and at pressures in the range of about 28 to 70 MPa for about 0.75 to 2.5 hours depending upon the matrix material. During the hot pressing step, a pressing pressure of about half of the predetermined total pressure is applied to the composite until the composite reaches the desired hot pressing temperature, then full pressure can be applied. Densification of the composite may be monitored by a linear variable displacement transducer attached to the top ram of the press.

To produce ceramic articles having more complex shapes, an injection molding technique is useful. In this method, the mix of ceramic powder and whiskers is provided with a decomposable organic binder which acts as a fluidizing agent. The moldable ceramic compositions will include an amount ranging from about 15 to 50% preferably from about 20 to about 35% by weight of the total mixture of the organic binder which serves to maintain the integrity of the shaped article prior to sintering. A preferred binding agent is a polyacetal having oxymethylene recurring units. The term "polyacetal" and the recurring unit should be understood to encompass both homopolymers and copolymers. Details of a useful polyacetal binder are disclosed in U.S. 4,624.812. The polyacetals are per se known in the art. For example, polyacetals commercially available under the registered trademark Celcon may be prepared by polymerizing anhydrous formaldehyde or trioxane in accordance with the teachings of U.S. Pat. No. 3,027,352, the contents of which are hereby incorporated by reference.

Other binders are known including polyolefins such as polyethylene and polypropylene, polystyrene, acrylic rubbers, nylon, and the like. Thermosets may also be used including epoxy and phenolformaldehyde resin systems.

The binding agent may also be comprised of small amounts of from about 1.0 to about 10% of known materials which serve an additional binding function. Such materials include low density polyethylene, atactic polypropylene, ethylene vinyl acetate and waxes such as stearic acid and paraffin wax.

Moldable ceramic compositions may further contain conventional amounts of wetting agents, plasticizers and other types of processing aids which are added to the composition to obtain a suitable rheological system for molding. Specifically, from about 0.5 to about 2.0% by weight of wetting agents or surfactants can promote adhesion between the ceramic powder and the binding agent thereby reducing the degree of agglomeration. Suitable wetting agents or surfactants include lignite, mineral oil and low molecular weight waxes. Plasticisers in an amount of from about 1.0 to about 10% by weight decrease the viscosity of the composite to promote mixing. Typical plasticizers include waxes, silicones, alkyl phthalates, polyalkylene (e.g., polyethylene) glycols and linear saturated polyesters. Mold release agents in an amount of from about 0.05 to about 1.0% by weight prevent adhesion to the mold wall thereby facilitating removal of the shaped article from the mold. Typical mold release agents include silicones and various phthalates and amides such as Acrawax C (a fatty acid amide).

To mold the ceramic composition into shaped articles, the selected ceramic powder and silicon carbide whiskers are initially dispersed or mixed within the binding agent. Also present at this time are any additives which are to be included in the composition. The mixture is next extruded at a die temperature in the range of from about 90° to about 220°C and a pressure in the range of from about 500 to about 2,000 psig. Extrusion can be achieved on various pieces of equipment known to those of ordinary skill in the art. For example, the equipment may be a twin-screw extruder operating at a die temperature of about 90°C and a pressure of about 1,200 psig. The composition may be injection molded. Thus, the mixture is heated typically to about 150°-200°C and injected into a cold mold at a pressure in the range from about 500 to 1,000 psig. The mold temperature is about 70°C wherein the composition hardens.

To remove the binding agent and any volatile additives, the molded composition is gradually heated. Although the rate of heating to reach final temperature will depend on the amount and type of components in the composition and the characteristics of the article, a typical rate of temperature increase will range of from about 1° to about 20°C per hour until a temperature in the range of about 500°C is reached. The selected temperature is then maintained for from about 0.5 to about 2.0 hours.

The temperature is then raised to that required for sintering the ceramic powder. While the rate of final temperature will naturally depend upon the characteristics of the ceramic powder and the shaped article, a rate of temperature increase will generally be in the range of from about a 50 to about 1,000 degrees per hour until a temperature at a range of from about 1,000° to about 1,800°C is obtained. To fully sinter the ceramic powder, the shaped article is held at final temperature for about 15 minutes to about 8 hours. Sintering is generally undertaken in an atmosphere composed of air or an inert gas. Sintering of the articles results in volumetric reduction of about 15 percent.

## EXAMPLE 1

2.5 g SiC whiskers are dispersed in 1 liter of a 1% aqueous polyvinyl alcohol solution. The dispersion is mixed in a Waring blender and the slurry freeze dried to remove water.

10 g of $Al_2O_3$ powder having a size of about 0.2 micron is mixed with the 2.5 g or 20 vol.% of the coated SiC whiskers in hexane using a Waring blender and the slurry dried. The mixture is uniaxially hot-pressed at a temperature of 1,600°C under pressure loading of 70 MPa for 1 hour. The density of the hot-pressed composite is greater than 99.7% of the theoretical density of alumina which is 3.97 $mg/m^3$.

The fracture toughness of the composite is 10.9 $MPa.m^{1/2}$.

## EXAMPLE 2

10 g of SiC whiskers are randomized into a felt. The felt is sprayed with a hot solution of 1% aqueous polyvinyl alcohol to coat and impregnate the polymer within the felt and to vaporize the water. The polymer coated felt is placed in a mold and a ceramic composite is formed by slip-casting. By this method, an aqueous slurry of silicon nitride powder (0.35 micron) is directed into the mold to coat and infiltrate the whisker felt. The water is discharged from the mold to leave the cast SiN-whisker composite. Once removed from the mold, the cast composite is sintered at 1,800°C for 2 hours.

The fracture toughness is 4.2 $MPa.m^{1/2}$.

**Claims**

1. A ceramic composite of high toughness and resistance to fracture comprising: a matrix of ceramic material having homogeneously dispersed therein silicon carbide whiskers, characterised in that the silicon carbide whiskers bear a coating of carbon.

2. The ceramic composite of claim 1 wherein the whiskers are present in amounts of from 5 to 60 vol.% based on the composite.

3. The ceramic composite of claim 2 wherein the whiskers are present in amounts of from 20 to 30 vol.% based on the composite.

4. The ceramic composite of any of claims 1-3 wherein the whiskers have an aspect ratio of less than 30.

5. The ceramic composite of any of claims 1-4 wherein the ceramic material is alumina.

6. The ceramic composite of any of claims 1-4 wherein the ceramic material is $Si_3N_4$.

7. A process for preparing a shaped ceramic composite of high toughness and resistance to fracture comprising forming a homogeneous mixture of particulate ceramic material with silicon carbide whiskers, shaping the mixture and heating the mixture during shaping and/or subsequent to shaping to sinter the ceramic material, characterised in that the silicon carbide whiskers in the shaped ceramic composite bear a carbon coating.

8. The process of claim 7 wherein the carbon coating is formed in situ during the heating.

9. The process of claim 8 wherein the silicon carbide whiskers in the said mixture are coated with an organic material which is convertible to a carbon coating during the heating.

10. The process of claim 9 wherein the organic material is applied as a liquid to the whiskers.

11. The process of claim 10 wherein the organic material is applied as a solution which is prepared by dissolving the organic material in a solvent.

12. The process of any of claims 9-11 wherein the organic material is a polymer.

13. The process of claim 7 wherein the silicon carbide whiskers in the said mixture already bear a carbon coating.

14. The process of any of claims 7-13 wherein the silicon carbide whiskers constitute from 5 to 60 vol.% of the said mixture.

15. The process of claim 14 wherein the silicon carbide whiskers constitute from 20 to 30 vol.% based on said composite.

16. The process of any of claims 7-15 wherein the silicon carbide whiskers have an aspect ratio of less than 30.

17. The process of any of claims 7-16 wherein the particulate ceramic material is a powder having a size of 0.05 to 1 micron.

18. The process of claim 17 wherein the ceramic powder has a size of 0.05 to 0.5 micron.

19. The process of any of claims 7-18 wherein the said mixture further includes an organic binder and the shaping is effected by placing the said mixture in a mold.

20. The process of claim 19 wherein the shaping is effected by extrusion or injection molding.

21. The process of any of claims 7-20 wherein the sintering temperature is in the range of 1,000° to 1,800°C.

22. The process of any of claims 7-21 wherein the ceramic material is selected from alumina, mullite, $B_4C$ or $Si_3N_4$.

European Patent Office

# EUROPEAN SEARCH REPORT

Application Number

EP 89 30 2726

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 209 320 (HITACHI LTD) * Claims 1,3,5-10,16-19; page 7, line 3 - page 8, line 17; page 13, line 17 - page 20, line 15 * | 1,3-11, 15-22 | C 04 B 35/80 |
| X | FR-A-2 544 661 (SOCIETE EUROPEENNE DE PROPULSION) * Claims 1-5; page 6, line 35 - page 7, line 15 * | 1,7-12 | |
| X | FR-A-2 602 505 (NORTON CO.) * Claims 1,3-5; page 21, line 34 - page 23, line 12 * | 1,6-11 | |
| X,P | DE-A-3 819 560 (TOKAI CARBON CO. LTD) * Claims 1-16; page 5, lines 4-44 * | 1,3-11, 15-22 | |
| | | | **TECHNICAL FIELDS SEARCHED (Int. Cl.4)** |
| | | | C 04 B |

The present search report has been drawn up for all claims

| Place of search | Date of completion of the search | Examiner |
|---|---|---|
| THE HAGUE | 15-09-1989 | LUETHE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document